# EUROPÄISCHE PATENTSCHRIFT

(11) **EP 0 412 975 B1**
(45) Veröffentlichungstag und Bekanntmachung des Hinweises auf die Patenterteilung: **28.07.1993**
(21) Anmeldenummer: 89904545.4
(22) Anmeldetag: 10.04.1989
(51) Int. Cl.: C04B 35/65

(54) **PULVERMETALLURGISCH ERZEUGTER KERAMIKFORMKÖRPER, SEINE VERWENDUNG UND HERSTELLUNG**
CERAMIC MOULDING PRODUCED BY POWDER METALLURGY, USE AND PREPARATION THEREOF
MOULAGE CERAMIQUE PRODUIT PAR METALLURGIE DES POUDRES, SON USAGE ET SA PREPARATION

(30) Priorität: 13.04.1988 DE 3812266
(43) Veröffentlichungstag der Anmeldung: 20.02.1991
(73) Patentinhaber: CLAUSSEN, Nils, D-21224 Rosengarten (DE)
(72) Erfinder: CLAUSSEN, Nils, D-21224 Rosengarten (DE)
(74) Vertreter: Huber, Bernhard, Dipl.-Chem.
(86) Internationale Anmeldenummer: EP8900382
(87) Internationale Veröffentlichungsnummer: WO8909755

(56) Entgegenhaltungen:
- EP-A- 0 168 295
- DE-B- 862 723
- GB-B- 962 749

## Beschreibung

Ein- und mehrphasige Formkörper mit keramischer Matrix werden zunehmend als temperatur- und verschleißfeste Komponenten im Maschinen- und Apparatebau eingesetzt. Solche Körper werden entweder über klassische keramische (d.h. pulvermetallurgische) Verfahren durch Pressen und Sintern hergestellt, oder sie werden durch Reaktion metallischer Prekursoren mit einer gasförmigen oder flüssigen Phase erzeugt (siehe z.B. "Reaction-Formed Ceramics", Am.Ceram.Soc.Bull, 67 (1988) 356). Diese sogenannten reaktionsgebundenen Keramiken beschränken sich bisher fast ausschließlich auf Si₃N₄ (RBSN) und SiC (RBSC). Eine weitere Möglichkeit, insbesondere mehrphasige Keramiken herzustellen, ist die Infiltration eines porösen keramischen Körpers mit einer metallischen oder keramischen Phase (s. z.B. Melt Infiltration Approach to Ceramic Composites", J.Am.Ceram.Soc. 71 (1988) C-96). In einem weiteren neuartigen Verfahren wird ein poröser keramischer Körper von einer keramischen Phase durchwachsen, die durch Reaktion eines Gases mit einer metallischen Schmelze entsteht, die einen ein- oder mehrseitigen Zugang zu dem porösen keramischen Vorkörper besitzt (s. z.B. "Formation of Lanxide Ceramic Composite Materials", J.Mater.Res 1 (1986) 81).

All diese Keramikklassen und ihre Herstellungsverfahren haben charakteristische Nachteile, die die nachfolgend beschriebene Erfindung kaum oder nur in geringem Maße aufweist. Der entscheidende Nachteil klassisch hergestellter Keramiken bzw. keramischer Verbundwerkstoffe liegt in der hohen linearen Schrumpfung, die zwischen dem Grünkörper und dem Endprodukt auftritt; sie beträgt üblicherweise 15 bis 25 %. Diese typische Schrumpfung macht die Form- und Maßhaltigkeit eines Formteils problematisch, sie führt zu Rißbildung und anderen qualitätsmindernden Fehlern. Die Schrumpfung einer keramischen Matrix wirkt sich besonders auch bei der Einlagerung von Verstärkungselementen wie Fasern, Plättchen und Whiskern oder andere, nicht mitschrumpfender Komponenten nachteilig auf den Gefügezusammenhalt aus. Die infolge der Schrumpfungsdifferenzen auftretenden hohen Spannungen führen fast immer zu schädlichen Rissen. Ein weiterer charakteristischer Nachteil besonders der klassisch hergestellten Oxidkeramiken liegt in der Bildung einer glasförmigen intergranularen Phase, die zwar den Sinter- bzw. Verdichtungsprozess beschleunigt, die mechanischen Hochtemperatureigenschaften aber stark beeinträchtigt.

Reaktionsgebundene Keramiken, vor allem Si₃N₄ (RBSN) und SiC und auch über den Lanxide-Prozess hergestellte Keramiken (u.a. Al₂O₃ und AlN) weisen zwar keine oder nur eine geringe Schrumpfung auf, der Herstellungsablauf wird aber durch die oft wochenlangen Reaktionszeiten empfindlich beeinträchtigt. Ein weiterer Nachteil der RBSN-artigen Keramiken liegt in der Tatsache, daß nur Körper mit selten mehr als 85 % der theoretischen Dichte erzielt werden können, was auf die mit abnehmender Porosität immer mehr reduzierte Stickstoffdiffusion zurückzuführen ist.

Eine solche geringe Dichte hat erfahrungsgemäß schlechte mechanische Eigenschaften zur Folge (s.a. "Review: Reaction-Bonded Silicon Nitride: its Formation and Properties", J.Marter.Sci., 14 (1979) 1017). Die Herstellung von keramischen Verbundwerkstoffen auf Al₂O₃- und AlN-Basis durch Schmelzreaktion und damit verbundene Durchwachsung eines porösen keramischen Vorkörpers ist u.a. in den kürzlich offengelegten europäischen Patentanmeldungen 0155831, 0169067, 0193292 und 0234704 beschrieben. Auch hierbei läuft die Reaktion sehr langsam ab. Außerdem ist eine Dimensionskontrolle der Körper mit großen Aufwand verbunden.

Der Erfindung liegt daher die Aufgabe zugrunde, einen Keramikformkörper zu schaffen, der die oben erwähnten Nachteile der bekannten Formkörper nicht oder nur in wesentlich geringerem Ausmaß aufweist.

Gelöst wird diese Aufgabe durch ein Verfahren zur Herstellung eines pulvermetallurgisch erzeugten Keramikformkörpers, der aus mindestens einer dispersen anorganischen Komponente besteht, die in einer Phase aus Aluminiumoxid eingebettet ist, eine Längenänderung um weniger als ± 10 % gegenüber dem Grünzustand aufweist, eine Porosität von weniger als 15 % und glasphasenfreie Korngrenzen besitzt, welches dadurch gekennzeichnet ist, daß man eine Mischung aus 25 bis 50 Vol.-% Aluminiumpulver und gegebenenfalls einem oder mehreren der Legierungselemente Mg, Si, Zn, Pb, Na, Li und Se und einer dispersen anorganischen Komponente, die mindestens 40 Vol.-% Aluminiumoxid, bezogen auf die Mischung, enthält, herstellt, mindestens 1 Stunde lang attritiert und dann daraus einen Grünkörper formt und diesen in einer sauerstoffhaltigen Atmosphäre bei Temperaturen zwischen 900 und 1700°C sintert.

Gemäß einer ersten Ausführungsform der Erfindung besteht die disperse anorganische Komponente überwiegend oder vollständig aus Al₂O₃ in Form von pulver-, plättchen- oder/und nadelförmigen Teilchen.

Gemäß einer weiteren bevorzugten Ausführungsform enthält die disperse Phase des Formkörpers Mullit, SiC, B₄C, TiC, Si₃N₄ oder Legierungen daraus in Form von Fasern, Whisker oder Plättchen, wobei die Gesamtmenge auf den Formkörper bezogen 5 bis 50 Vol.-% beträgt. Die disperse Phase liegt im Gemisch mit den oben beschriebenen Teilchen aus Al₂O₃ und/oder AlN und gegebenenfalls ZrO₂ vor.

In einer weiteren bevorzugten Ausführungsform enthält die disperse anorganische Komponente zusätzlich Pulverteilchen aus einer oder mehreren der karbidischen Phase SiC, B₄C, TiC, WC, TaC und/oder der nitridischen Phase Si₃N₄ und/oder der boridischen Phasen ZrB₂ und TiB₂.

Durch geeignete Wahl des bei der Herstellung des Körpers angewendeten Preßdruckes und des Verhältnisses von Al₂O₃ zu metallischem Aluminium läßt sich die lineare Schrumpfung oder Ausdehnung auf weniger als 1 % gegenüber dem grünen Zustand vermindern, wie in Beispiel 1 näher beschrieben ist.

Beim Sintern zwischen 900 und 1600°C an der Luft verbindet die metallische Phase die Al₂O₃-Pulverteilchen (und gegebenenfalls andere anorganische Partikel) unter gleichzeitiger Reaktion zu Al₂O₃. Die mit dieser Reaktion verbundene Volumenausdehnung füllt dabei die meisten der im Preßkörper vorhandenen Poren aus und kompensiert die durch Sintern verursachte Schrumpfung. Bei geeigneter Wahl von Preßdruck für den Grünkörper und Verhältnis von Al₂O₃ (und gegebenenfalls anderer anorganischer Phasen oder Phasengemischen) zu Al-Pulver kann eine Volumenänderung zwischen Grün- und Fertigkörper völlig vermieden werden. Das Produkt kann analog zu reaktionsgebundenem Si₃N₄ als reaktionsgebundenes Al₂O₃ (RBAO) bezeichnet werden.

Die Bildung des erfindungsgemäßen Formkörpers ist überraschend, da reines Al-Pulver unter Preß- und Glühbedingungen entweder explosionsartig reagiert (bei extremer Al-Pulverfeinheit, d.h. < ca. 10 µm) oder aber hefekuchenartig aufschwillt, ohne einen Zusammenhang zwischen den entstehenden Al₂O₃-Partikeln zu bewirken. D.h., es war zu erwarten, daß kein fester Körper entsteht. Eine Pulverkombination aus Al₂O₃ mit reinem Al führt jedoch zu einem relativ festen, reaktionsgebundenen Körper. Die erfindungsgemäß eingesetzte Pulverform von Al mit gegebenenfalls geringen Mengen an Mg-, Si- und Zn-Pulver zusammen mit mindestens 40 Vol.-% Al₂O₃-Pulver oder AlN ergibt noch dichtere und festere Formkörper. Zwar ist aus Arbeiten von W. Thiele (Aluminium 38 (1962) 707), S. Balicki (Trace Inst.Hutn. 10 (1958) 208), M. Drouzy und C. Mascare (Metallurgical Reviews, 131 (1969) 25), M. Richard und R. Emery (Fonderie 373 (1977) 389) und aus den zuvor erwähnten Lanxide-Anmeldungen (s.u.a. EP 0234704) bekannt, daß insbesondere Zusätze von Mg, Na, Se, Zn, Mn und Si die Oxidation von Al-Schmelzen beschleunigen, sie hätten aber um so mehr einen hefekuchenartig aufgeblähten Körper ergeben müssen. Auch wenn ZnO und MgO in Mengen zwischen etwa 0,1 und etwa 5 Gew.-% zugesetzt wurden, führte reines Al-Pulver zu festen Körpern. Besonders gegenüber den Produkten des Lanxide-Prozesses ist es überraschend, daß die metallische Phase vollständig zu Al₂O₃ oxidiert wird. Eine mögliche Erklärung liefert die hohe Dichte der im erfindungsgemäßen Formkörper vorhandenen Korngrenzen, die als Sauerstoffdiffusionswege zur Verfügung stehen. Eine weitere Überraschung_{,} für die bisher keine Erklärung gefunden wurde, stellt die Tatsache dar, daß in dem erfindungsgemäßen Formkörper Korngrenzen ohne Glasphasen beobachtet werden konnten: dieses Phänomen läßt sich bei mindestens 30 % der untersuchten Korngrenzen beobachten.

Die Sinterung erfolgt vorzugsweise an der Luft bei Temperaturen zwischen 900 und 1550°C bei einem Gesamtdruck von 0,05 bis 0,3 MPa.

Die für die Herstellung des Grünkörpers eingesetzte Menge an Al-Pulver beträgt 25 bis 50 Vol.-%, bezogen auf die Mischung mit der dispersen anorganischen Komponente. Wenn Al-Legierungspulver verwendet wird, kann dieses als solches mit den oben angegebenen Legierungsbestandteilen eingesetzt werden oder aus einer Mischung der Pulver von reinem Aluminium und den Legierungselementen oder den in situ unter den Sinterbedingungen die Legierung ausbildenden Verbindungen der Legierungselemente bestehen. Insbesondere kann in diesem Fall reines unlegiertes Al-Pulver zusammen mit Oxiden der Legierungselemente zugesetzt werden, wobei Magnesium in Form von MgO oder MgAl₂O₄, Si in Form von SiO₂ und Zn in Form von ZnO in Mengen, die zwischen 0,1 und 10 Gew.-%, vorzugsweise von 0,5 bis 10 Gew.-% des Legierungselements entsprechen, eingesetzt werden können. Demzufolge ist der bevorzugte Gehalt an metallischen Legierungselementen in den Al-Legierungen 0,5 bis 10 Gew.-% Mg und/oder Si und/oder Mn und/oder Zn und/oder Pb und/oder Se und/oder Na und/oder Li. Das Al₂O₃-Pulver wird zweckmäßig mit einer Teilchengröße im Bereich von 1 bis 100 µm, vorzugsweise 10 bis 30 µm als Ausgangskomponente eingesetzt.

Die Ausgangskomponenten werden in einem Attritor, homogenisiert bzw. mechanisch legiert und das erhaltene Pulver dann zum Grünkörper verarbeitet. Der Grünkörper aus der Metall/Keramikpulvermischung kann durch Trockenpressen, Schlickergießen, Spritzgießen oder Extrudieren hergestellt werden. Das Vermahlen bzw. Attritieren erfolgt zweckmäßig in einem gegenüber den Komponenten inerten flüssigen Medium wie Aceton oder einem Alkohol wie Isopropanol.

Die Sinterstufe selbst wird in Sauerstoff- oder stickstoffhaltiger Atmosphäre bei einem Druck zwischen 0,05 und 10 MPa durchgeführt. Bevorzugt wird der Bereich zwischen 0,08 und 0,5 MPa, ganz besonders bevorzugt der Bereich zwischen 0,09 und 0,11 MPa.

Gemäß einer besonderen Ausführungsform der Erfindung wird nach der Sinterbehandlung noch eine heißisostatische Nachverdichtung in einem Druckübertragungsmedium aus Ar, N₂ oder einem Gemisch aus Ar und O₂ durchgeführt (HIP).

Zur Sinterbehandlung kann der Grünkörper üblicherweise mit einer Aufwärmphase auf die eigentliche Sintertemperatur aufgeheizt werden. Die Aufwärmphase kann jedoch auch weggelassen und der Grünkörper direkt in den heißen Ofen bei Temperaturen zwischen 900 und 1200°C eingeführt und bei dieser Temperatur bis zur mindestteilweisen Reaktion des Al-Pulvers gehalten und anschließend abgekühlt werden. Bevorzugt wird die Haltezeit so eingestellt, daß eine vollständige Umsetzung des Al-Pulvers stattfindet. Zu diesem Zweck wird der eigentlichen Glühbehandlung bei 900 bis 1200°C noch eine Nacherwärmung auf 1300 bis 1600°C angeschlossen, um eine vollständige Umsetzung des Aluminiums sicherzustellen.

Der erfindungsgemäße Keramikformkörper kann als Matrix für die Einbettung von Whiskern, Fasern oder anderen Verstärkungsformen unterschiedlicher anorganischer Stoffe verwendet werden. In diesem Falle werden zweckmäßig 5 bis 50 Vol.-%, bezogen auf die Mischung von disperser anorganischer Komponente und Al-Pulver, an Fasern, Whisker oder Plättchen zugesetzt, die ihrerseits wiederum aus Al₂O₃, Mullit, ZrO₂, SiC, B₄C, TiC, Si₃N₄, AlN oder Legierungen dieser Substanzen bestehen können.

Neben der oben schon genannten bevorzugten anorganischen Komponente in Form von Al₂O₃ und AlN können als disperse anorganische Komponente auch Pulverteilchen aus einer oder mehreren der karbidischen Phasen SiC, B₄C, TiC, WC, TaC und/oder der nitridischen Phase Si₃N₄ und/oder der boridischen Phasen ZrB₂ oder TiB₂ eingesetzt werden.

Eine weitere Verbesserung der physikalischen Eigenschaften des erfindungsgemäßen Formkörpers läßt sich durch Infiltration des fertigen Formkörpers mit flüssigem Aluminium erzielen. Hierbei werden die noch vorhandenen Poren durch das flüssige Aluminium gefüllt, so daß ein vollständig dichter Körper erzielt wird.

Der erfindungsgemäße Keramikformkörper wird vorzugsweise als temperatur- oder verschleißfeste Komponente im Maschinen-, Apparate- und Motorenbau, als Schneidwerkzeug oder als Lager- und Dichtungselement eingesetzt.

Den Zusammenhang zwischen linearer Längenänderung des Formkörpers gegenüber dem Grünzustand in Abhängigkeit von der prozentualen Zusammensetzung des Grünkörpers und dem in der Nacherhitzungsphase angewendeten isostatischen Preßdruck zeigt die Figur der beigefügten Zeichnung. Angewendet wurden verschiedene Zusammensetzungen von Al₂O₃ in Pulverform und Al-Pulver. Die Sinterung erfolgte durch 15 Min. Sintern bei 1150°C und anschliessender Nacherwärmung 30 Min. bei 1550°C an der Luft. Man erkennt, daß mit abnehmendem Gehalt an Al-Pulver der für eine möglichst geringe lineare Schrumpfung bzw. Ausdehnung erforderliche isostatische Preßdruck steigt.

Der erfindungsgemäße Formkörper und die Art seiner Herstellung besitzen eine Reihe von Vorteilen, die im folgenden aufgezählt sind:
1. Die Längenänderung zwischen dem Grünkörper und dem Fertigprodukt ist kleiner als 10 %, sie kann durch geeignete Auswahl der Komponenten auf weniger als 1 %, sogar auf Null eingestellt werden.
2. Die geringe Schrumpfung bzw. Ausdehnung zwischen Grün- und Fertigkörper hat zur Folge, daß nichtschrumpfende Einlagerungsphasen wie Whisker, Fasern oder Plättchen den drucklosen Sintervorgang nicht wie in klassisch hergestellten keramischen Matrizes behindern, d.h. der erfindungsgemäße Formkörper kann also unter Vermeidung des Heißpressens zusammen mit Fasern verdichtet werden.
3. Die geringe Volumenänderung bei der Glühbehandlung ermöglicht es außerdem, große Teile spannungsfrei herzustellen und
4. Grünkörper sehr schnell aufzuheizen, was die Sinterdauer zum Teil erheblich verkürzen kann.
5. Die Sintertemperaturen sind mit 900 bis 1200°C erheblich niedriger als bei klassisch hergestellten Al₂O₃-haltigen Keramiken.
6. Die Reaktions- und damit Herstellungszeiten sind im Vergleich zu anderen reaktionsgebundenen Keramiken wie RBSN oder RBSC wesentlich kürzer; dies gilt auch gegenüber den nach dem Schmelzreaktionsverfahren (Lanxide-Prozess) hergestellten Keramiken.
7. Alle pulvermetallurgischen Formgebungsverfahren sind ohne Probleme anwendbar.
8. Der Einbau von ZrO₂ trägt aufgrund der großen Sauerstoffleitfähigkeit des ZrO₂ zu einer beschleunigten und noch vollkommeneren Reaktion der Al-haltigen Bindephase zu Al₂O₃ bei und verstärkt zusätzlich das Fertigprodukt infolge seiner spannungsinduzierten Umwandlungsfähigkeit.
9. Die klassische Sinterung Al₂O₃-haltiger Keramiken beinhaltet immer ein mehr oder weniger starkes Kornwachstum, was üblicherweise die Festigkeit beeinträchtigt. Bei der erfindungsgemäßen Keramik bleibt die ursprüngliche, für den Grünkörper eingesetzte Al₂O₃-Teilchengröße nahezu erhalten.
10. Der unter 9. aufgeführte Vorteil gilt im wesentlichen auch für anderen eingelagerte Phasen, die aufgrund der niedrigen Glühtemperaturen kaum oder zumindest erheblich geringer mit der Al₂O₃-haltigen Matrixphase reagieren als es bei der klassischen Sinterung der Fall wäre. Infolgedessen bleiben auch hier Morphologie und Größe der eingebauten Partikel erhalten.
11. Ein Vorteil besonders gegenüber den nach dem Lanxide-Prozess hergestellten keramischen Verbundwerkstoffen ist die sehr kleine Korngröße (z.T. <1 µm), die im erfindungsgemäßen Körper eingestellt werden kann.

Die folgenden Beispiele erläutern die Erfindung weiter.

### Beispiel 1

100 g einer Pulvermenge, bestehend aus feinem Al₂O₃-Pulver (Alcoa CT 1000, d = 1,3 µm), und 25 Vol.-% einer Al-Legierungspulvermischung (93 Gew.-% Al, 5 Gew.-% Si, 2 Gew.-% Mg, 1 Gew.-% Zn, alle Fa. Eckart) wurden 6 h in einer Attritormühle mit 3 mm TZP-Mahlkugeln in Isopropanol gemahlen bzw. mechanisch legiert. Danach wurde die Mischung in einem Rotovap-Gerät getrocknet und anschliessend isostatisch mit Drücken zwischen 45 und 900 MPa zu Zylindern mit den Abmessungen 1 cm hoch, 1 cm Durchmesser gepreßt. Danach wurden sie an Luft 15 min bei 1150°C (1. Glühschritt) und danach 30 min bei 1550°C (2. Glühschritt) geglüht. Nach dem ersten Glühschritt waren die Al₂O₃-Pulverteilchen mit einer neuentstandenen Al₂O₃-Phase verbunden, die allerdings noch perlenförmige Anteile der Al-Metallphase enthielt. Nach dem zweiten Glühschritt waren die Proben hell weiß und die Al-Phase war restlos in Al₂O₃ umgewandelt. TEM-Untersuchungen ergaben, daß die Porosität weniger als 10 % betrug und daß einige Korngrenzen keine amorphen Phasen enthielten.

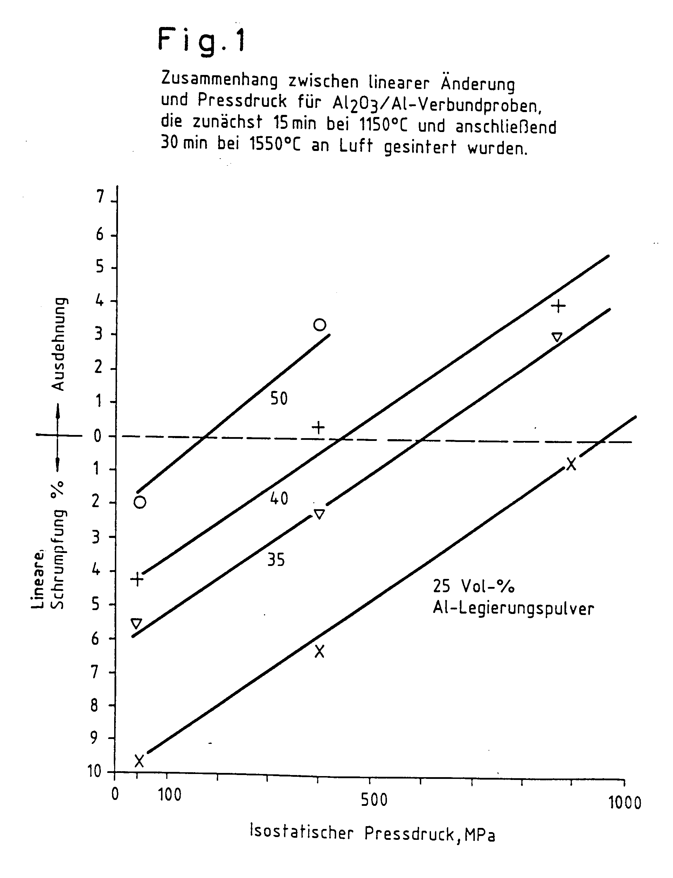

Die gleichen Versuche wurden auch mit Volumenanteilen von 35, 40, 50 Vol.-% Al-Legierungspulver durchgeführt. Die lineare Änderung beim Glühen (Differenz der Dimensionen im Grünzustand und im fertigen Zustand) ist in Fig. 1 der Zeichnung dargestellt. Daraus wird deutlich, daß bei bestimmten Volumenanteilen (bzw. Verhältnissen von Metall- zu Keramikpulver) mit jeweils anderen Preßdrücken eine "Null"-Schrumpfung (also eine Dimensionsstabilität) erzielt werden konnte. Beispielsweise ergäbe bei 25 Vol.-% Al-Legierungspulver ein isostatischer Druck von 950 MPa eine "Null"-Schrumpfung.

### Beispiel 2

Grünkörperproben gemäß Beispiel 1 wurden in einen 1200°C heißen Ofen ohne Aufwärmphase eingebracht. Die fertigen Proben unterschieden sich nicht von denen gemäß Beispiel 1,d.h. sie zeigten keine Rißbildung durch den erlittenen Thermoschock.

### Beispiel 3

100 g einer Pulvermischung aus 20 Gew.-% mit 2 Y₂O₃-dotiertem ZrO₂ und 80 Gew.-% Al₂O₃ (vorlegiert von Toso, Japan, Typ Super Z) sowie 30 Vol.-% Al-Legierungspulver (wie Beispiel 1) wurden wie in Beispiel 1 beschrieben behandelt, wobei der Preßdruck 800 MPa betrug, und dann bei 1550°C 1 h gesintert. Die lineare Schrumpfung betrug < 3 % und die Festigkeit 300 MPa.

### Beispiel 4

In einer Versuchsreihe wurden zwei verschiedene Aluminiumpulver eingesetzt. zum einen kugelige Teilchen mit Durchmessern zwischen 20 und 200 µm und mehr als 99 % Al-Gehalt (Fa. Aldrich-Chemie GmbH, BRD) sowie Al-Flocken mit einer Größe von 30 bis 300 µm und einer Dicke von 3 bis 5 µm (Al, "fein gepulvert", E. Merck AG, Darmstadt, BRD) eingesetzt. Diesem Pulver wurden 5 Gew.-% Si, 2,5 Gew.-% Mg und 1 Gew.-% Zn-Pulver Zugesetzt. Die Metallpulver wurden mit einem groben Al₂O₃-Schleifpulver von 13 µm (F 500/13 H.C. Starck, Berlin, BRD) in Mengen zwischen 25 und 40 Vol.-% gemischt. Der größere Teil der Versuche wurde dabei unter Anwendung einer Zusammensetzung mit 35 Vol.-% Al-Flocken ausgeführt. Bei zwei Versuchen wurde 10 Vol.-% ZrO₂-Pulver, welches mit 3 Mol-% Y₂O₃ (TZ-3Y, Toso, Tokyo, Japan) legiert war und 15 Vol.-% Al₂O₃-Plättchen (Al-13pl, Showa Aluminium Industries KK, Tokyo, Japan) der 35 Vol.-% Al-Flocken enthaltenden Zusamennsetzung, die im folgenden mit 35 C bezeichnet wird, zugesetzt. Die verschiedenen Pulvergemische wurden im Attritor mit Aceton oder Isopropanol in UHMW-Polyethylen-Gehältern unter Verwendung von TZP-Mahlkugeln von 3 mm Durchmesser vermahlen. Nach ein- bis zwölfstündigem Attritieren wurden die erhaltenen Pulvermischungen in einem Rotationsverdampfer getrocknet. Dann wurden die Mischungen bei 200 bis 900 MPa zu quadratischen Stäben von 24x4x4mm isostatisch gepreßt. Die erhaltenen Probestäbe wurden im grünen Zustand vor der Hitzebehandlung auf exakte Dimensionen bearbeitet, die mit Mikrometermessung kontrolliert wurden.

Die Wärmebehandlung wurde in einem Vertikaldilatometer (Fa. Bähr Gerätebau GmbH, Hüllhorst, BRD) in Luft bei Temperaturen zwischen 1000 und 1500°C und unterschiedlichen Erhitzungsgeschwindigkeiten durchgeführt. Die Entwicklung der Mikrostruktur wurde durch optische Mikroskopie an mit Harz infiltrierten teilweise und voll durchreagierten Proben untersucht. Die Probekörper für die Messungen der physikalischen Eigenschaften wurden in einem Kastenofen folgender Erhitzungsbehandlung unterzogen:

Erhitzungsgeschwindigkeit: 5°C/Minute.
8 Stunden halten bei 1200°C, 2 Stunden halten bei 1550°C, Abkühlung mit 15°C/Minute.

Die erhaltenen Proben wurden auf die Dimension 22x3,5x3,5 mm geschliffen und poliert und dann die Bruchfestigkeit und die Chevron-Kerb-Zähigkeit K_{Ic} durch 4-Punkt-Biegung unter Anwendung einer inneren und äußeren Spannweite von 18 bzw. 6 mm bestimmt. Das Wärmeschockverhalten wurde untersucht durch Abschreckung von verschiedenen Temperaturen auf Raumtemperatur, Wasser und anschließend Bestimmung der aufrechterhaltenen Festigkeit.

Bei der Vermahlung wirkten die 13 µm Al₂O₃-Körner als Unterstützung für den Mahlvorgang, so daß die Al-Teilchen in sehr kleine Stücke zerteilt wurden, ohne daß eine Verschweißung derselben auftritt. Die Abmessungen der Al-Flocken wurden dabei nach zwei Stunden auf unter 10 µm verringert. Nach 8 Stunden Attritieren lagen alle Al-Teilchen unter etwa 5 µm und lagen homogen dispergiert vor ohne Entwicklung einer flockigen Mikrostruktur. Die Größe der Al₂O₃-Teilchen verringerte sich auf etwa 1 µm. Bei einer Mahldauer über 8 Stunden hinaus wurden keine merklichen Änderungen in der Struktur festgestellt. Nach 8-stündigem Vermahlen in Aceton war nur ein unter 1 % liegender Teil des metallischen Aluminiums oxidiert.

Die Schrumpfung der erhaltenen Keramikformkörper, die aus dem 8 Stunden vermahlenen und wie oben beschriebenen hitzebehandelten Material erhalten wurden, betrug bei 400 MPa isostatischem Druck 4 %, bei 700 MPa weniger als 1 %.

Die Biegefestigkeit der bei 400 MPa isogepreßten 35 C-Proben bei Raumtemperatur wurde mit 281 ± 15 MPa, der entsprechende K_{Ic}-Wert 2,35 ± 0,2 MPa√m. Bei den Proben, die unter Zusatz von entweder 10 Vol.-% 3Y-ZrO₂-Pulver oder 15 Vol.-% Al₂O₃-Plättchen zur 35 C-Zusammensetzung erhalten worden waren, betrug der K_{Ic}-Wert 2,6 bzw. 2,75 MPa√m.

### Beispiel 5

Der 40 Vol.-% Al-Legierungspulver enthaltenen attritierten Mischung gemäß Beispiel 4 wurden 20 Vol.-% ca. 1 mm lange ZrO₂-verstärkte Al₂O₃-Fasern (Du Pont, Typ PRD 166) zugegeben und trocken im Taumelmischer eingemischt. Danach wurden mit einem Druck von 400 MPa daraus Grünkörper gepreßt und bei 1500°C 2 h an Luft gesintert. Die Fasern waren danach, ohne Matrixrisse erzeugt zu haben, in der Al₂O₃-Matrix eingebettet.

### Beispiel 6

100 g einer Pulvermischung aus 65 Vol.-% AlN (H.C. Starck, Grade C, ca. 1 µm) und 35 Vol.-% des Al-Legierungspulvers gemäß Beispiel 1 wurden wie in Beispiel 1 beschrieben attritiert, bei 600 MPa isostatisch gepreßt und anschließend 2 h bei 1550°C unter N₂ gesintert. Der entstandene Sinterkörper wies danach eine Schrumpfung von <10 % auf.

### Beispiel 7

40 Vol.-% Al₂O₃-Plättchen (13 µm Durchmesser, Showa Aluminium, Tokyo, Japan) wurden der Zusammensetzung von Beispiel 1, die 8 Stunden im Attritor vermahlen worden war, bei weiterem Vermahlen im Attritor während 20 Minuten zugemischt. Die getrocknete Mischung wurde bei 400 MPa isogepreßt und 8 Stunden bei 1200°C wärmebehandelt. Die lineare Schrumpfung betrug + 2,1 % (tatsächlich eine Expansion) und die Enddichte betrug 88 % der theoretischen Dichte von Al₂O₃ (3,96 g/cm³). Die offenen Poren wurden dann mit Al gefüllt durch Druckinfiltration bei 20 bar in einem Gasdruckofen. Die Bruchfestigkeit des so erhaltenen Formkörpers betrug 420 MPa, der K_{Ic}-Wert 7,5 MPa/m, gemessen mit der Chevron-Kerb-Technik mit 4-Punkt-Belastung unter Verwendung von Probekörpern von 24x4x4 mm.

### Beispiel 8

37 g reines Al-Pulver (kugelförmig; Firma Aldrich) werden mit 63 g Al₂O₃ (13µm) 8 Stunden in Aceton attritiert. Dem attritierten Gemisch werden dann 100 g SiC in Form eines Pulvers, welches 30 % Teilchen mit ca. 5 µm und 20 % Teilchen mit ca. 20 µm enthält, 2 Stunden in einem Taumelmischer vermengt. Die erhaltene Mischung wird getrocknet und bei 300 MPa statisch zu einem Grünkörper gepreßt. Dieser wird einer Wärmebehandlung bei 1200°C für 1/2 Stunde und bei 1400°C für 2 Stunden unterworfen. Die dabei erhaltene lineare Schrumpfung gegenüber dem Grünkörper beträgt 0 %. Die offenen Poren des erhaltenen Grünkörpers werden dann, wie in Beispiel 7 beschrieben, mit Al gefüllt.

## Patentansprüche

1. Verfahren zur Herstellung eines pulvermetallurgisch erzeugten Keramikformkörpers, der aus mindestens einer dispersen anorganischen Komponente besteht, die in einer Phase aus Aluminiumoxid eingebettet ist, eine Längenänderung um weniger als ± 10 % gegenüber dem Grünzustand aufweist, eine Porosität von weniger als 15 % und glasphasenfreie Korngrenzen besitzt,
**dadurch gekennzeichnet,**
daß man eine Mischung aus 25 bis 50 Vol.-% Aluminiumpulver und gegebenenfalls einem oder mehreren der Legierungselemente Mg, Si, Zn, Pb, Na, Li und Se und einer dispersen anorganischen Komponente, die mindestens 40 Vol.-% Aluminiumoxid, bezogen auf die Mischung, enthält, herstellt, mindestens 1 Stunde lang attritiert und dann daraus einen Grünkörper formt und diesen in einer sauerstoffhaltigen Atmosphäre bei Temperaturen zwischen 900 und 1700°C sintert.

2. Verfahren nach Anspruch 1,
**dadurch gekennzeichnet,**
daß das Al mit Legierungselementen in Form einer Vorlegierung oder einer Pulvermischung eingesetzt wird.

3. Verfahren nach Anspruch 2,
**dadurch gekennzeichnet,**
daß der Gehalt an metallischen Legierungselementen auf die Aluminiummenge bezogen 0,1 bis 10 Gew.-% Mg und/oder Si und/oder Mn und/oder Zn und/oder Pb und/oder Se und/oder Na und/oder Li beträgt.

4. Verfahren nach Anspruch 2,
**dadurch gekennzeichnet,**
daß das Aluminiumpulver als Gemisch von unlegiertem Al-Pulver mit Oxiden der Legierungselemente verwendet wird und Mg in Form von MgO oder MgAl₂O₄, Si in Form von SiO₂ und Zn in Form von ZnO eingesetzt werden.

5. Verfahren nach einem der Ansprüche 1 bis 4,
**dadurch gekennzeichnet,**
daß ein Aluminiumoxidpulver mit einer Teilchengröße im Bereich von 1 bis 100 µm als disperse anorganische Ausgangskomponente verwendet wird.

6. Verfahren nach Anspruch 5,
**dadurch gekennzeichnet,**
daß eine Aluminiumoxid-Teilchengröße von 10 bis 30 µm verwendet wird.

7. Verfahren nach einem der vorhergehenden Ansprüche,
**dadurch gekennzeichnet,**
daß die disperse anorganische Komponente zusätzlich ZrO₂ oder/und eine oder mehrere der carbidischen Phasen SiC, B₄C, TiC, WC, TaC und/oder nitridischen Phase Si₃N₄ und/oder boridischen Phasen ZrB₂ und TiB₂ enthält.

8. Verfahren nach einem der vorhergehenden Ansprüche,
**dadurch gekennzeichnet,**
daß der attritierten Mischung Fasern, Whisker oder Plättchen aus Mullit, SiC, B₄C, TiC, Si₃N₄, Al₂O₃ oder Legierungen daraus in einer Menge von 5 bis 50 Vol.-% bezogen auf die attritierte Mischung, zugesetzt werden.

9. Verfahren nach einem der vorhergehenden Ansprüche,
**dadurch gekennzeichnet,**
daß der Grünkörper aus den Metall/Keramik-Pulvermischungen trockengepreßt, schlickergegossen, spritzgegossen oder extrudiert wird.

10. Verfahren nach einem der vorhergehenden Ansprüche,
**dadurch gekennzeichnet,**
daß die Sinterung an Luft bei Temperaturen zwischen 900 und 1550°C und 0,05 bis 10 MPa Gesamtdruck durchgeführt wird.

11. Verfahren nach Anspruch 10,
**dadurch gekennzeichnet,**
daß der Grünkörper ohne Aufwärmphase in den heißen Ofen bei Temperaturen zwischen 900 und 1200°C eingeführt wird, bei dieser Temperatur bis zur teilweisen oder völligen Reaktion des Al-Pulvers gehalten und anschließend abgekühlt wird.

12. Verfahren nach Anspruch 11,
**dadurch gekennzeichnet,**
daß nach der Glühbehandlung bei 900 bis 1200°C auf 1300 bis 1600°C erwärmt wird, um eine vollständige Reaktion zu garantieren.

13. Verfahren nach einem der vorhergehenden Ansprüche,
**dadurch gekennzeichnet,**
daß nach der Sinterbehandlung heißisostatisch in einem Druckübertragungsmedium aus Ar, N₂ oder einem Gemisch aus Ar und O₂ nachverdichtet wird (HIP).

14. Verfahren nach einem der vorhergehenden Ansprüche,
**dadurch gekennzeichnet,**
daß der Formkörper nach der Wärmebehandlung bei 900 bis 1700°C mit flüssigem Al infiltriert wird.

15. Pulvermetallurgisch erzeugter Keramikformkörper, bestehend aus mindestens einer dispersen anorganischen Komponente, die in einer Phase aus Aluminiumoxid eingebettet ist,
**dadurch gekennzeichnet,**
daß er
a) eine Längenänderung um weniger als ± 10 % gegenüber dem Grünzustand aufweist,
b) eine Porosität von weniger als 15 % besitzt,
c) glasphasenfreie Korngrenzen besitzt und durch Sintern eines Grünkörpers erhalten wird, der aus einer attritierten Mischung von 25 bis 50 Vol.-% Aluminiumpulver, das ein oder mehrere der Legierungselemente Mg, Si, Zn, Pb, Na, Li und Se aufweisen kann und einer dispersen anorganischen Komponente, die mindestens 40 Vol.-% Aluminiumoxid bezogen auf diese Mischung enthält, hergestellt ist.

16. Formkörper nach Anspruch 15,
**dadurch gekennzeichnet,**
daß die disperse anorganische Komponente überwiegend oder vollständig aus pulver-, plättchen- oder nadelförmigen Teilchen von Al₂O₃ besteht.

17. Formkörper nach Anspruch 15 oder 16,
**dadurch gekennzeichnet,**
daß die disperse anorganische Komponente zusätzlich undotiertes oder mit Y₂O₃- oder CeO₂- oder MgO oder CaO-dotiertes ZrO₂ enthält.

18. Formkörper nach einem der Ansprüche 15 bis 17,
**dadurch gekennzeichnet,**
daß er 5 bis 50 Vol.-% bezogen auf die Mischung von disperser anorganischer Komponente und Al-Legierung Fasern, Whisker oder Plättchen aus Al₂O₃, Mullit, ZrO₂, SiC, B₄C, TiC, Si₃N₄, AlN oder Legierungen daraus dispergiert enthält.

19. Verwendung des Formkörpers nach den Ansprüchen 15 bis 18 als temperatur- und verschleißfeste Komponente im Maschinen-, Apparate- und Motorenbau, als Schneidwerkzeug oder als Lager- und Dichtungselement.

20. Verfahren zur Herstellung eines pulvermetallurgisch erzeugten Keramikformkörpers, der aus mindestens einer dispersen anorganischen Komponente besteht, die in einer Phase aus Aluminiumnitrid eingebettet ist, eine Längenänderung um weniger als ± 10 % gegenüber dem Grünzustand aufweist, eine Porosität von weniger als 15 % und glasphasenfreie Korngrenzen besitzt,
**dadurch gekennzeichnet,**
daß man eine Mischung aus 25 bis 50 Vol.-% Aluminiumpulver und gegebenenfalls einem oder mehreren der Legierungselemente Mg, Si, Zn, Pb, Na, Li und Se und einer dispersen anorganischen Komponente, die mindestens 40 Vol.-% Aluminiumnitrid, bezogen auf die Mischung, enthält, herstellt, mindestens 1 Stunde lang attritiert und dann daraus einen Grünkörper formt und diesen in einer Stickstoff-Atmosphäre bei Temperaturen zwischen 900 und 1700°C sintert.

## Claims

1. Process for the production of a powder-metallurgically produced ceramic formed body, which consists of at least one disperse inorganic component which is embedded in a Phase of aluminium oxide, which displays a longitudinal change of less than ± 10% in comparison with the green state, possesses a porosity of less than 15% and glass phase-free grain boundaries, characterised in that one produces a mixture of 25 to 50 vol.% aluminium powder and possibly of one or more of the alloying elements Mg, Si, Zn, Pb, Na, Li and Se and of a disperse inorganic component which contains at least 40 vol.% of aluminium oxide, referred to the mixture, attrites for at least 1 hour and then forms a green body therefrom and sinters this in an oxygen-containing atmosphere at temperatures between 900 and 1700°C.

2. Process according to claim 1, characterised in that the Al is used with the alloying elements in the form of a pre-alloy or of a powder mixture.

3. Process according to claim 2, characterised in that the content of metallic alloying elements, referred to the amount of aluminium, amounts to 0.1 to 10 wt.% Mg and/or Si and/or Mn and/or Zn and/or Pb and/or Se and/or Na and/or Li.

4. Process according to claim 2, characterised in that the aluminium powder is used as mixture of non-alloyed Al powder with oxides of the alloying elements and Mg is used in the form of MgO or MgAl₂O₄, Si in the form of SiO₂ and Zn in the form of ZnO.

5. Process according to one of claims 1 to 4, characterised in that an aluminium oxide powder is used with a particle size in the range of 1 to 100 µm as disperse inorganic starting component.

6. Process according to claim 5, characterised in that an aluminium oxide particle size of 10 to 30 µm is used.

7. Process according to one of the preceding claims, characterised in that the disperse inorganic component additionally contains ZrO₂ and/or one or more of the carbidic phases SiC, B₄C, TiC, WC, TaC and/or nitridic Phase Si₃N₄ and/or boridic phases ZrB₂ and TiB₂.

8. Process according to one of the preceding claims, characterised in that, to the attrited mixture, there are added fibres, whiskers or platelets of mullite, SiC, B₄C, TiC, Si₃N₄, Al₂O₃ or alloys thereof in an amount of 5 to 50 vol.%, referred to the attrited mixture.

9. Process according to one of the preceding claims, characterised in that the green body is dry pressed, slip cast, injection moulded or extruded from the metal/ceramic powder mixtures.

10. Process according to one of the preceding claims, characterised in that the sintering is carried out in air at temperatures between 900 and 1550°C and 0.05 to 10 MPa total pressure.

11. Process according to claim 10, characterised in that the green body, without heating-up phase, is introduced into the hot furnace at temperatures between 900 and 1200°C, kept at this temperature up to partial or complete reaction of the Al powder and subsequently cooled.

12. Process according to claim 11, characterised in that, after the calcining treatment at 900 to 1200°C, it is heated to 1300 to 1600°C in order to guarantee a complete reaction.

13. Process according to one of the preceding claims, characterised in that, after the sinter treating, it is hot isostatically post-consolidated (HIP) in a pressure transfer medium of Ar, N₂ or a mixture of Ar and O₂.

14. Process according to one of the preceding claims, characterised in that, after the heat treatment, the formed body is infiltrated at 900 to 1700°C with liquid Al.

15. Powder metallurgically-produced ceramic formed body, consisting of at least one disperse inorganic component which is embedded in a phase of aluminium oxide, characterised in that it
a) displays a longitudinal change of less than ± 10% in comparison with the green state,
b) possesses a porosity of less than 15%,
c) possesses glass phase-free grain boundaries and is obtained by sintering of a green body which is produced from an attrited mixture of 25 to 50 vol.% of aluminium powder which can have one or more of the alloying elements Mg, Si, Zn, Pb, Na, Li and Se and from a disperse inorganic component which contains at least 40 vol.% of aluminium oxide, referred to this mixture.

16. Formed body according to claim 15, characterised in that the disperse inorganic component consists preponderantly or completely of powder-, platelet- or needle-shaped particles of Al₂O₃.

17. Formed body according to claim 15 or 16, characterised in that the disperse inorganic component additionally contains ZrO₂ undoped or doped with Y₂O₃ or CeO₂ or MgO or CaO.

18. Formed body according to one of claims 15 to 17, characterised in that it contains dispersed 5 to 50 vol.%, referred to the mixture of disperse inorganic component and Al alloy, of fibres, whiskers or platelets of Al₂O₃, mullite, ZrO₂, SiC, B₄C, TiC, Si₃N₄, AlN or alloys thereof.

19. Use of the formed body according to claims 15 to 18 as temperature- and wear-resistant component in machine, apparatus and engine construction, as cutting tool or as bearing or sealing element.

20. Process for the production of a powder-metallurgically produced ceramic formed body, which consists of at least one disperse inorganic component which is embedded in a phase of aluminium nitride, which displays a longitudinal change of less than ± 10% in comparison with the green state, possesses a porosity of less than 15% and glass phase-free grain boundaries, characterised in that one produces a mixture of 25 to 50 vol.% of aluminium powder and possibly of one or more of the alloying elements Mg, Si, Zn, Pb, Na, Li and Se and a disperse inorganic component which contains at least 40 vol.% aluminium nitride, referred to the mixture, attrites for at least 1 hour and then forms a green body therefrom and sinters this in a nitrogen atmosphere at temperatures between 900 and 1700°C.

## Revendications

1. Procédé de fabrication d'un corps moulé céramique fabriqué par métallurgie des poudres qui consiste en au moins un composant inorganique dispersé qui est inclus dans une phase constituée par de l'oxyde d'aluminium, qui présente une modification de longueur inférieure à ± 10% par rapport à l'état cru, qui possède une porosité inférieure à 15% et des joints de grains exempts de phase vitreuse, caractérisé en ce que l'on prépare un mélange constitué par 25 à 50% en volume de poudre d'aluminium et éventuellement d'un ou plusieurs des éléments d'alliage Mg, Si, Zn, Pb, Na, Li et Se et par un composant inorganique dispersé qui contient au moins 40% en volume d'oxyde d'aluminium, par rapport au mélange, que l'on broie pendant au moins une heure puis que l'on moule en un corps cru que l'on fritte dans une atmosphère contenant de l'oxygène à des températures comprises entre 900 et 1700°C.

2. Procédé selon la revendication 1, caractérisé en ce que Al est utilisé avec des éléments d'alliage sous forme d'un pré-alliage ou d'un mélange de poudres.

3. Procédé selon la revendication 2, caractérisé en ce que la teneur en éléments d'alliage métalliques par rapport à la quantité d'aluminium est de 0,1 à 10% en poids de Mg et/ou de Si et/ou de Mn et/ou de Zn et/ou de Pb et/ou de Se et/ou de Na et/ou de Li.

4. Procédé selon la revendication 2, caractérisé en ce que la poudre d'aluminium est utilisée sous forme d'un mélange de poudre de Al non alliée et d'oxydes des éléments d'alliage et en ce que Mg est utilisé sous forme de MgO ou de MgAl₂O₄, Si sous forme de SiO₂ et Zn sous forme de ZnO.

5. Procédé selon l'une des revendications 1 à 4, caractérisé en ce que l'on utilise une poudre d'oxyde d'aluminium d'une taille de particules située dans le domaine de 1 à 100 µm sous forme d'un composant de départ inorganique dispersé.

6. Procédé selon la revendication 5, caractérisé en ce que l'on utilise une taille de particules d'oxyde d'aluminium de 10 à 30 µm.

7. Procédé selon l'une des revendications précédentes, caractérisé en ce que le composant inorganique dispersé contient en outre ZrO₂ et/ou une ou plusieurs des phase de carbure SiC, B₄C, TiC, WC, TaC et/ou une phase de nitrure Si₃N₄ et/ou des phases de borure ZrB₂ et TiB₂.

8. Procédé selon l'une des revendications précédentes, caractérisé en ce qu'au mélange broyé sont ajoutées des fibres, des trichites ou des plaquettes de mullite, SiC, B₄C, TiC, Si₃N₄, Al₂O₃ ou d'alliages de ceux-ci en une quantité de 5 à 50% en volume par rapport au mélange broyé.

9. Procédé selon l'une des revendications précédentes, caractérisé en ce que le corps cru constitué par les mélanges de poudres métalliques/céramiques est comprimé à sec, moulé en barbotine, moulé par injection ou extrudé.

10. Procédé selon l'une des revendications précédentes, caractérisé en ce que le frittage est accompli à l'air à des températures comprises entre 900 et 1550°C et sous une pression totale de 0,05 à 10 MPa.

11. Procédé selon la revendication 10, caractérisé en ce que le corps cru est introduit sans phase de chauffage dans le four chaud à des températures comprises entre 900 et 1200°C, maintenu à cette température jusqu'à une réaction partielle ou totale de la poudre de Al puis refroidi.

12. Procédé selon la revendication 11, caractérisé en ce qu'à la suite du traitement de calcination entre 900 et 1200°C on chauffe entre 1300 et 1600°C pour garantir une réaction totale.

13. Procédé selon l'une des revendications précédentes, caractérisé en ce qu'à la suite du traitement de frittage on opère un post-compactage par compression isostatique à chaud (HIP) dans un milieu de transmission de la pression constitué par Ar, N₂ ou par un mélange de Ar et de O₂.

14. Procédé selon l'une des revendications précédentes, caractérisé en ce que le corps moulé est infiltré par Al liquide après le traitement thermique entre 900 et 1700°C.

15. Corps moulé céramique obtenu par métallurgie des poudres, consistant en au moins un composant inorganique dispersé qui est inclus dans une phase d'oxyde d'aluminium, caractérisé en ce que
a) il présente une modification de longueur inférieure à ± 10% par rapport à l'état cru,
b) il possède une porosité inférieure à 15%,
c) il possède des joints de grains exempts de phases vitreuses et il est obtenu par frittage d'un corps cru qui est fabriqué à partir d'un mélange broyé de 25 à 50% en volume de poudre d'aluminium, qui peut présenter un ou plusieurs des éléments d'alliage Mg, Si, Zn, Pb, Na, Li et Se, et d'un composant inorganique dispersé qui contient au moins 40% en volume d'oxyde d'aluminium par rapport à ce mélange.

16. Corps moulé selon la revendication 15, caractérisé en ce que le composant inorganique dispersé consiste principalement ou totalement en particules de Al₂O₃ sous forme de poudre, de plaquettes ou d'aiguilles.

17. Corps moulé selon la revendication 15 ou 16, caractérisé en ce que le composant inorganique dispersé contient en outre ZrO₂ non dopé ou dopé avec Y₂O₃ ou CeO₂ ou MgO ou CaO.

18. Corps moulé selon l'une des revendications 15 à 17, caractérisé en ce qu'il contient, par rapport au mélange de composant inorganique dispersé et d'alliage de Al, 5 à 50% en volume de fibres, de trichites ou de plaquettes de Al₂O₃, mullite, ZrO₂, SiC, B₄C, TiC, Si₃N₄, AlN ou d'alliages de ceux-ci.

19. Utilisation du corps moulé selon les revendications 15 à 18 comme composant résistant à la température et à l'usure dans la construction des machines, des appareils et des moteurs, comme outil de coupe ou comme élément de palier ou d'étanchéité.

20. Procédé de fabrication d'un corps moulé céramique fabriqué par métallurgie des poudres qui consiste en au moins un composant inorganique dispersé qui est inclus dans une phase constituée par du nitrure d'aluminium, qui présente une modification de longueur inférieure à ± 10% par rapport à l'état cru, qui possède une porosité inférieure à 15% et des joints de grains exempts de phase vitreuse, caractérisé en ce que l'on prépare un mélange constitué par 25 à 50% en volume de poudre d'aluminium et éventuellement d'un ou plusieurs des éléments d'alliage Mg, Si, Zn, Pb, Na, Li et Se et par un composant inorganique dispersé qui contient au moins 40% en volume de nitrure d'aluminium, par rapport au mélange, que l'on broie pendant au moins une heure puis que l'on moule en un corps cru que l'on fritte dans une atmosphère d'azote à des températures comprises entre 900 et 1700°C.
